# EUROPEAN PATENT APPLICATION

(11) **EP 4 471 803 A1**
(43) Date of publication of application: **04.12.2024**
(21) Application number: 22922594.1
(22) Date of filing: 25.01.2022
(51) Int. Cl.: G21C 17/108

(54) **REACTOR CORE POWER ONLINE MONITORING METHOD AND SYSTEM**

(71) Applicant: China Nuclear Power Technology Research Institute Co., Ltd, Shenzhen, Guangdong 518031 (CN); China General Nuclear Power Corporation, Shenzhen, Guangdong 518028 (CN); CGN Power Co., Ltd., Shenzen, Guangdong 518028 (CN); China Nuclear Power Engineering Co., Ltd., Shenzhen, Guangdong 518124 (CN)
(72) Inventor: HU, Yisong, Shenzhen, Guangdong 518031 (CN); LI, Kejia, Shenzhen, Guangdong 518031 (CN); LU, Xianghui, Shenzhen, Guangdong 518031 (CN); MENG, Shuqi, Shenzhen, Guangdong 518031 (CN); HU, Yousen, Shenzhen, Guangdong 518031 (CN); WANG, Weiru, Shenzhen, Guangdong 518031 (CN); ZHANG, Yijun, Shenzhen, Guangdong 518031 (CN); FENG, Yingjie, Shenzhen, Guangdong 518031 (CN); HE, Mingtao, Shenzhen, Guangdong 518031 (CN); ZENG, Shuo, Shenzhen, Guangdong 518031 (CN); WU, Yuting, Shenzhen, Guangdong 518031 (CN); CHEN, Tianming, Shenzhen, Guangdong 518031 (CN); MAO, Yulong, Shenzhen, Guangdong 518031 (CN); ZHANG, Wei, Shenzhen, Guangdong 518031 (CN); PENG, Sitao, Shenzhen, Guangdong 518031 (CN); CHENG, Yanhua, Shenzhen, Guangdong 518031 (CN)
(74) Representative: Westphal, Mussgnug & Partner, Patentanwälte mbB
(86) International application number: PCT/CN2022/073627
(87) International publication number: WO 2023/141741

(57) **Abstract**

The present application relates to a reactor core power online monitoring method and system. The reactor core power online monitoring method comprises: obtaining measurement data of each self-powered detector in each group, wherein the self-powered detectors in a reactor core are divided into 2-4 groups, a plurality of self-powered detectors in each group are uniformly distributed on the reactor core in the radial direction of the reactor core and are pairwise centrosymmetric relative to a reactor core original point, and the plurality of self-powered detectors of each group permeate each other in an interested manner; and respectively determining, according to the measurement data, whether a failure occurs in each self-powered detector in each group, and for a self-powered detector in which a failure occurs, taking measurement data of a self-powered detector which is centrosymmetric with the self-powered detector as own measurement data.

## Description

### TECHNICAL FIELD

The invention relates to the field of nuclear power design, in particular to a reactor core power online monitoring method and system.

### DESCRIPTION OF RELATED ART

The reactor core power distribution is an important input parameter for the reactor core safety margin calculation of nuclear reactor. The on-line monitoring of the reactor core power distribution can not only provide the reference of the reactor core state for the operators to reduce the over-conservative operation rules, but also provide the input parameters for the accurate calculation of the fuel assembly burnup. Therefore, the on-line monitoring of reactor core power distribution is of great significance to ensure the safety of reactor core and improve the economic benefits of nuclear power plants.

In the reactor core power on-line monitoring system based on the neutron flux rate, the neutron flux rate needs to be measured by the self-powered neutron detectors which are dispersed in the fuel assembly, and then the three-dimensional power distribution of the whole reactor core can be calculated according to the measurement data and the arrangement mode of each self-powered neutron detector. The arrangement of self-powered neutron detectors in the reactor has a significant impact on the real-time monitoring function of the reactor core.

At present, a plurality of groups of distributed arrangements are considered when the self-powered neutron detectors are arranged in the reactor, so that the three-dimensional power distribution of the reactor core is reconstructed to be as close as possible to a true value; however, if one or some of the self-powered neutron detectors fail, the measurement data of the failed self-powered neutron detector is lost, so that the accuracy of reconfigure computing of the three-dimensional power distribution is affected.

### BRIEF SUMMARY OF THE INVENTION

### TECHNICAL PROBLEM

The technical problem to be solved by the present invention is the defect in the prior art that the accuracy of the reconfigure computing of the three-dimensional power distribution will be affected if a self-powered detector fails.

### SOLUTION OF THE PROBLEM

### TECHNICAL SOLUTIONS

The technical scheme adopted by the invention for solving the technical problem is that a reactor core power online monitoring method is constructed, and comprises the following steps of:
Obtaining measurement data of each self-powered detector in each group, wherein the self-powered detectors in the reactor core are divided into 2 to 4 groups, the self-powered detectors in each group are uniformly distributed in the reactor core in the radial direction of the reactor core, every two self-powered detectors are centrosymmetric with respect to the origin of the reactor core, and the self-powered detector in each group are mutually crossed and penetrated; In the axial direction of the reactor core, the vertical central axis of each self-powered detector is parallel to the vertical central axis of the reactor core;
Determining whether each self-powered detector in each group has a failure or not according to the measurement data, and taking the measurement data of the self-powered detector which is centrosymmetric with the self-powered detector with the failure as own measurement data;
Performing reconfigurable computing on the three-dimensional power distribution of the whole reactor core according to the measurement data of each self-powered detector in each group.

Preferably, the arrangement position of the self-powered detector does not coincide with the arrangement position of the control rod.

Preferably, the individual self-powered detectors are arranged in alternate rows and columns in the reactor core.

Preferably, the arrangement density of the fuel assemblies of the self-powered detector at the periphery of the reactor core is lower than that of the fuel assemblies at the center of the reactor core.

The invention also provides an reactor core power online monitoring system which comprises:
A plurality of self-powered detectors, wherein the self-powered detectors in the reactor core are divided into 2 to 4 groups, and in the radial direction of the reactor core, a plurality of self-powered detectors in each group are uniformly distributed in the reactor core and are centrosymmetric with respect to the original point of the reactor core in pairs, and the self-powered detector in each group are mutually crossed and permeated; In the axial direction of the reactor core, the vertical central axis of each self-powered detector is parallel to the vertical central axis of the reactor core;
An acquisition module, which is used for obtaining the measurement data of each self-powered detector in each group;
A failure processing module, which is used for determining whether each self-powered detector in each group has a failure according to the measurement data and taking the measurement data of the self-powered detector which is centrosymmetric with the self-powered detector with failure as the own measurement data;
A reconfigure computing module, which is used for carrying out reconfigure computing on the three-dimensional power distribution of the whole reactor core according to the measurement data of each self-powered detector in each group.

Preferably, the arrangement position of the self-powered detector is not coincident with the arrangement position of the control rod.

Preferably, the individual self-powered detectors are arranged in alternate rows and columns in the reactor core.

Preferably, the arrangement density of the fuel assemblies of the self-powered detector at the periphery of the reactor core is lower than that of the fuel assemblies at the center of the reactor core.

Preferably, in a 177 reactor core, the number of the self-powered detectors is 42, and the self-powered detectors are divided into four groups, wherein a first group, a second group and a third group respectively comprise 10 self-powered detectors, and a fourth group comprises 12 self-powered detectors.

Preferably, the 10 self-powered detectors of the first group are respectively arranged in the following fuel assemblies of the 177 reactor core: the sixth column of the first row, the tenth column of the third row, the fourth column of the fifth row, the eighth column of the fifth row, the fourteenth column of the seventh row, the second column of the ninth row, the eighth column of the eleventh row, the twelfth column of the eleventh row, the sixth column of the thirteen row, and the tenth column of the fifth row;
The 10 self-powered detectors of the second group are respectively arranged in the following fuel assemblies of the 177 reactor core: the fourth column of the third row, the eighth column of the third row, the fourteenth column of the fifth row, the fourth column of the seventh row, the tenth column of the seventh row, the sixth column of the ninth row, the twelfth column of the ninth row, the second column of the eleventh row, the eighth column of the thirteenth row, and the twelfth column of the thirteenth row,
The 10 self-powered detectors of the third group are respectively arranged in the following fuel assemblies of the 177 reactor core: the tenth column of the first row, the second column of the fifth row, the sixth column of the fifth row, the twelfth column of the fifth row, the eighth column of the seventh row, the eighth column of the ninth row, the fourth column of the eleventh row, the tenth column of the eleven row, the fourteenth column of the eleventh row, and the sixth column of the fifteenth row;
The 12 self-powered detectors of the fourth group are respectively arranged in the following fuel assemblies of the 177 reactor core: the sixth column of the third row, the twelfth column of the third row, the tenth column of the fifth row, the second column of the seventh row, the sixth column of the seventh row, the twelfth column of the seventh row, the fourth column of the ninth row, the tenth column of the ninth row, the fourteenth column of the ninth line, the sixth columns of the eleventh row, the fourth column of the thirteenth row, and the tenth column of the thirteenth row.

Preferably, in a 37 reactor core, the number of self-powered detectors is 12 and is divided into two groups, each group comprise six self-powered detectors.

Preferably, the six self-powered detectors of the first group are respectively arranged in the following fuel assemblies of the 37 reactor core: the third column of the first row, the first column of the third row, the fifth column of the third row, the third column of the fifth row, the seventh column of the fifth row, and the fifth column of the seventh row;

The six self-powered detectors of the second group are respectively arranged in the following fuel assemblies of the 37 reactor core: the fifth column of the first row, the third column of the third row, the seventh column of the third row, the first column of the fifth row, the fifth column of the fifth row, and the third column of the seventh row.

Preferably, in a 121 reactor core, the number of the self-powered detectors is 30, and the self-powered detectors are divided into four groups, wherein a first group and a third group respectively comprises eight self-powered detectors, and a second group and a fourth group respectively comprises seven self-powered detectors.

Preferably, the eight self-powered detectors of the first group are respectively arranged in the following fuel assemblies of the 121 reactor core: the sixth column of the first row, the fourth column of the fifth row, the eighth column of the fifth row, the twelfth column of the fifth row, the second column of the ninth row, the sixth column of the ninth row, the tenth column of the ninth row, and the eighth column of the thirteenth row;

The seven self-powered detectors of the second group are respectively arranged in the following fuel assemblies of the 121 reactor core: the fourth column of the third row, the eighth column of the third row, the fourth column of the seventh row, the eighth column of the seventh row, the twelfth column of the seventh row, the sixth column of the eleventh row, and the tenth column of the eleventh row;

The eight self-powered detectors of the third group are respectively arranged in the following fuel assemblies of the 121 reactor core: the eighth column of the first row, the second column of the fifth row, the sixth column of the fifth row, the tenth column of the fifth row, the fourth column of the ninth row, the eighth column of the ninth row, the twelfth column of the ninth row, and the sixth column of the thirteenth row;

The seven self-powered detectors of the fourth group are respectively arranged in the following fuel assemblies of the 121 reactor core: the sixth column of the third row, the tenth column of the third row, the second column of the seventh row, the sixth column of the seventh row, the tenth column of the seven row, the fourth column of the eleventh row, and the eighth column of the eleventh row.

Preferably, in a 157 reactor core, the number of self-powered detectors is 40 and is divided into four groups, each group comprise 10 self-powered detectors each.

Preferably, the 10 self-powered detectors of the first group are respectively arranged in the following fuel assemblies of the 157 reactor core: the seventh column of the first row, the third column of the fifth row, the seventh column of the fifth row, the eleventh column of the fifth row, the thirteenth column of the seventh row, the third column of the ninth row, the fifth column of the eleventh row, the ninth column of the eleventh row, the thirteenth column of the eleventh row, and the ninth column of the fifteenth row;

The 10 self-powered detectors of the second group are respectively arranged in the following fuel assemblies of the 157 reactor core: the ninth column of the first row, the ninth column of the fifth row, the thirteenth column of the fifth row, the third column of the seventh row, the seventh column of the seventh row, the ninth column of the ninth row, the thirteenth column of the ninth row, the third column of the eleventh row, the seventh column of the eleventh row, and the seventh column of the fifth row;

The 10 self-powered detectors of the third group are respectively arranged in the following fuel assemblies of the 157 reactor core: the seventh column of the third row, the eleventh column of the third row; the fifth column of the fifth row, the eleventh column of the seventh row, the fifteenth column of the seventh row, the first column of the ninth row, the fifth column of the ninth row, the fifth column of the thirteenth row, the fifth column of the thirteenth row, and the ninth column of the thirteenth row;

The 10 self-powered detectors of the fourth group are respectively arranged in the following fuel assemblies of the 157 reactor core: the fifth column of the third row, the ninth column of the third row, the first column of the seventh row, the fifth column of the seventh row, the ninth column of the seven row, the seventh column of the nine row, the eleventh column of the ninth row, the fifteenth column of the ninth row, the seventh column of the thirteenth row, and the eleventh column of the thirteenth row.

Preferably, in a 193 reactor core, the number of the self-powered detectors is 52, and the self-powered detectors are divided into four groups, wherein a first group and a fourth group respectively comprises 12 self-powered detectors, and a second group and a third group respectively comprises 14 self-powered detectors.

Preferably, the 12 self-powered detectors of the first group are respectively arranged in the following fuel assemblies of the 193 reactor core: the fifth column of the first row, the ninth column of the third row, the fifth column of the fifth row, the thirteenth column of the fifth row, the first column of the seventh row, the ninth column of the seventh row, the seventh columns of the ninth row, the fifteenth columns of the ninth row, the third columns of the eleventh row, the eleventh columns of the eleventh row, the seventh column of the thirteenth row, and the eleventh column of the fifth row;

The 14 self-powered detectors of the second group are respectively arranged in the following fuel assemblies of the 193 reactor core: the seventh column of the first row, the third column of the third row, the eleventh column of the third row, the seventh column of the fifth row, the fifteenth column of the fifth row, the third column of the seventh row, the eleventh column of the seventh row, the fifth column of the ninth row, the thirteenth column of the ninth row, the tenth column of the eleventh row, the fifth column of the thirteenth row, the thirteenth column of the thirteenth row, and the ninth column of the fifteenth row;

The 14 self-powered detectors of the third group are respectively arranged in the following fuel assemblies of the 193 reactor core: the ninth column of the first row, the fifth column of the third row, the thirteenth column of the third row, the first column of the fifth row, the ninth column of the fifth row, the fifth column of the seventh row, the thirteenth column of the seventh row, the third column of the ninth row, the eleventh column of the ninth row, the seventh column of the eleventh row, the fifteenth column of the eleventh row, the third column of the thirteenth row, the eleventh column of the thirteenth row, and the seventh column of the fifteenth row;

The 12 self-powered detectors of the fourth group are respectively arranged in the following fuel assemblies of the 193 reactor core: the eleventh column of the first row, the seventh column of the third row, the third column of the fifth row, the eleventh columns of the fifth row, the seventh columns of the seventh row, the fifteenth columns of the seventh row, the first columns of the ninth row, the ninth column of the ninth row, the fifth column of the eleventh row, the thirteenth column of the eleventh row, the ninth column of the thirteenth row, and the fifth column of the fifteenth row.

Preferably, in a 241 reactor core, the number of the self-powered detectors is 60 and is divided into four groups, wherein a first group and a fourth group respectively comprises 14 self-powered detectors, and a second group and a third group respectively comprises 16 self-powered detectors.

Preferably, the 14 self-powered detectors of the first group are respectively arranged in the following fuel assemblies of the 241 reactor core: the sixth column of the second row, the tenth column of the fourth row, the fourteenth column of the fourth row, the second column of the sixth row, the sixth column of the sixth row, the tenth column of the eighth row, the fourteenth column of the eighth row, the fourth column of the tenth row, the eighth column of the tenth row, the twelfth column of the twelfth row, the sixteenth column of the twelfth row, the fourth column of the fourteenth row, the eighth column of the fourteenth row, and the twelfth column of the sixteenth row;

The 16 self-powered detectors of the second group are respectively arranged in the following fuel assemblies of the 241 reactor core: the fourth column of the second row, the eighth column of the second row, the twelfth column of the fourth row, the sixteenth column of the fourth row, the fourth column of the sixth row, the eighth column of the sixth row, the twelfth column of the eighth row, the sixteenth column of the eighth row, the second column of the tenth row, the sixth column of the tenth row, the tenth column of the twelfth row, the fourteenth column of the twelfth row, the second column of the fourteenth row, the sixth column of the fourteenth row, the tenth column of the sixteenth row, and the fourteenth column of the sixteenth row;

The 16 self-powered detectors of the third group are respectively arranged in the following fuel assemblies of the 241 reactor core: the tenth column of the second row, the fourteenth column of the second row, the second column of the fourth row, the sixth column of the fourth row, the tenth column of the sixth row, the fourteenth column of the sixth row, the second column of the eighth row, the sixth column of the eighth row, the twelfth column of the tenth row, the sixteenth column of tenth row, the fourth column of the twelfth row, the eighth column of the twelfth row, the twelfth column of the fourteenth row, the sixteenth column of the fourteenth row, the fourth column of the sixteenth row, and the eighth column of the sixteenth row;

The 14 self-powered detectors of the fourth group are respectively arranged in the following fuel assemblies of the 241 reactor core: the twelfth column of the second row, the fourth column of the fourth row, the eighth column of the fourth row, the twelfth column of the sixth row, the sixteenth column of the sixth row, the fourth column of the eighth row, the eighth column of the eighth row, the tenth column of the tenth row, the fourteenth column of the tenth row, the second column of the twelfth row, the sixth column of the twelfth row, the tenth column of the fourteenth row, the fourteenth column of the fourteenth row, and the sixth column of the sixteenth row.

### THE BENEFICIAL EFFECTS OF INVENTION

In the technical scheme provided by the invention, when the self-powered detectors are arranged, because the self-powered detectors are uniformly distributed in the reactor, the neutron flux rate of the reactor core can be comprehensively detected; In addition, because every two self-powered detectors in each group are centrosymmetric, when one of the self-powered detectors fails, the measurement data of the other self-powered detector can be used to replace the failure data of the self-powered detector, so that the capacity of each self-powered detector in each group for detecting the reactor core neutron flux rate in real time can be greatly improved, and the accuracy of three-dimensional power distribution reconfigure computing cannot be affected by the failure of one or more self-powered detectors.

### BRIEF DESCRIPTION OF THE SEVERAL VIEWS OF THE DRAWINGS

Fig. 1 is a flow chart of a first embodiment of a reactor core power online monitoring method of the present invention;
Fig. 2 is a logic structure diagram of the first embodiment of the reactor core power online monitoring system of the present invention;
Fig. 3 is an arrangement diagram of a first embodiment of the self-powered detectors of the present invention;
Fig. 4 is an arrangement diagram of a second embodiment of the self-powered detectors of the present invention;
Fig. 5 is an arrangement diagram of a third embodiment of the self-powered detectors of the present invention;
Fig. 6 is an arrangement diagram of a fourth embodiment of the self-powered detectors of the present invention;
Fig. 7 is an arrangement diagram of a fifth embodiment of the self-powered detectors of the present invention;
Fig. 8 is an arrangement diagram of a sixth embodiment of the self-powered detectors of the present invention.

### DETAILED DESCRIPTION OF THE INVENTION

The technical solutions in the embodiments of the present invention will be clearly and completely described below in conjunction with the accompanying drawings in the embodiments of the present invention. Obviously, the described embodiments are only a part of the embodiments, not all of the embodiments. Based on the embodiments of the present invention, all other embodiments obtained by those of ordinary skill in the art without creative work belong to the scope of protection of the present invention.

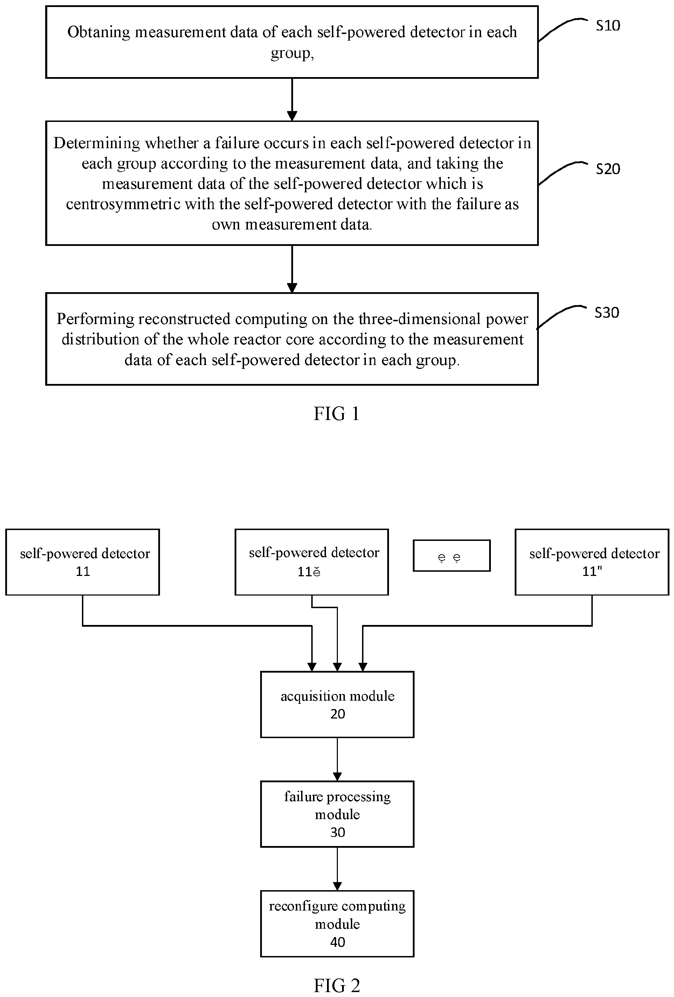

Fig. 1 is a flow chart of a first embodiment of a reactor core power online monitoring method according to the present invention, and the reactor core power online monitoring method of this embodiment comprises:
Step S10.Obtaning measurement data of each self-powered detector in each group, wherein the self-powered detectors in the reactor core are divided into 2 to 4 groups, the self-powered detectors in each group are uniformly distributed in the reactor core in the radial direction of the reactor core, every two self-powered detectors are centrosymmetric with respect to the origin of the reactor core, and the self-powered detector in each group are mutually crossed and penetrated. In the axial direction of the reactor core, the vertical central axis of each self-powered detector is parallel to the vertical central axis of the reactor core.

In this step, when arranging the self-powered detectors, the symmetry of the reactor core power distribution can be used to reduce the arrangement of measuring points, and the symmetry of the reactor core power distribution can be used to make appropriate redundant arrangement. Specifically, the following principles can be followed: the self-powered detectors of each group should be scattered in the whole reactor, and should not be too dense in a certain area or line of the reactor core; The self-powered detectors of each group shall cross each other; ensure that the vertical central axis of the self-powered detectors is parallel to the vertical central axis of the reactor core; the self-powered detectors of each group shall be symmetrical along the origin of the reactor core and evenly distributed in the reactor core to ensure that they can accurately simulate the neutron flux rate of the whole reactor core.

Step S20. determining whether a failure occurs in each self-powered detector in each group according to the measurement data, and taking the measurement data of the self-powered detector which is centrosymmetric with the self-powered detector with the failure as own measurement data.

In this step, it is possible to determine whether the corresponding self-powered detector is failure based on the measurement data of each self-powered detector, for example, no data is output, or the output data is not within a preset range, etc... For a self-powered detector with a failure, the measurement data of the self-powered detector which is centrosymmetric to the self-powered detector is used instead of the failure data.

Step S30. Performing reconstructed computing on the three-dimensional power distribution of the whole reactor core according to the measurement data of each self-powered detector in each group.

Through the technical scheme of the embodiment, when the self-powered detectors are arranged, the self-powered detectors are uniformly distributed in the reactor, so that the neutron flux rate of the reactor core can be comprehensively detected. In addition, because every two self-powered detectors in each group are centrosymmetric, when one of the self-powered detectors fails, the measurement data of the other self-powered detector can be used to replace the failure data of the self-powered detector, so that the capacity of each self-powered detector in each group for detecting the reactor core neutron flux rate in real time can be greatly improved, and the accuracy of three-dimensional power distribution reconfigure computing cannot be affected by the failure of one or more self-powered detectors.

Further, in consideration of the influence of the structural limitation and the movement of the control rods, when the self-powered detector is arranged, the arrangement position of the self-powered detector does not coincide with the arrangement position of the control rods, that is, the self-powered detectors are not arranged in the fuel assembly where the control rods are arranged.

Further, each of the self-powered detectors is arranged in alternate rows and columns within the reactor core.

Further, the arrangement density of the fuel assemblies of the self-powered detector at the periphery of the reactor core is less than that at the center of the reactor core. In this embodiment, because of the lower power of the fuel assemblies at the periphery, less self-powered detectors can be arranged at the periphery of the reactor core.

Fig. 2 is a logic structure diagram of a first embodiment of the reactor core power online monitoring system of the present invention. The reactor core power online monitoring system of this embodiment comprises a plurality of self-powered detectors 11, 11'.., 11 " , an acquisition module 20, a failure processing module 30, and a reconfigure computing module 40, wherein the self-powered detectors 11, 11'.., 11 " are divided into 2-4 groups, and in the radial direction of the reactor core, a plurality of self-powered detectors of each group are uniformly distributed in the reactor core and are centrosymmetric with respect to the origin of the reactor core in pairs, and the self-powered detectors of each group are mutually crossed and penetrated. The acquisition module 20 is used for obtaining the measurement data of each self-powered detector in each group, and the failure processing module 30 is used for respectively determining whether each self-powered detector in each group has a failure according to the measurement data, and for the self-powered detector with a failure, taking the measurement data of the self-powered detector centrosymmetric with the self-powered detector as the own measurement data. The reconfigure computing module 40 is used for reconfigure computing the three-dimensional power distribution of the whole reactor core according to the measurement data of each self-powered detector in each group.

Further, in consideration of the influence of the structural limitation and the movement of the control rods, when the self-powered detector is arranged, the arrangement position of the self-powered detector does not coincide with the arrangement position of the control rods, that is, the self-powered detectors are not arranged in the fuel assembly where the control rods are arranged. Furthermore, the individual self-powered detectors are arranged in alternate rows and columns within the reactor core. In addition, considering that the power of the fuel assemblies at the periphery is lower, the arrangement density of the fuel assemblies of the self-powered detector at the periphery of the reactor core is lower than that of the fuel assembly at the center of the reactor core.

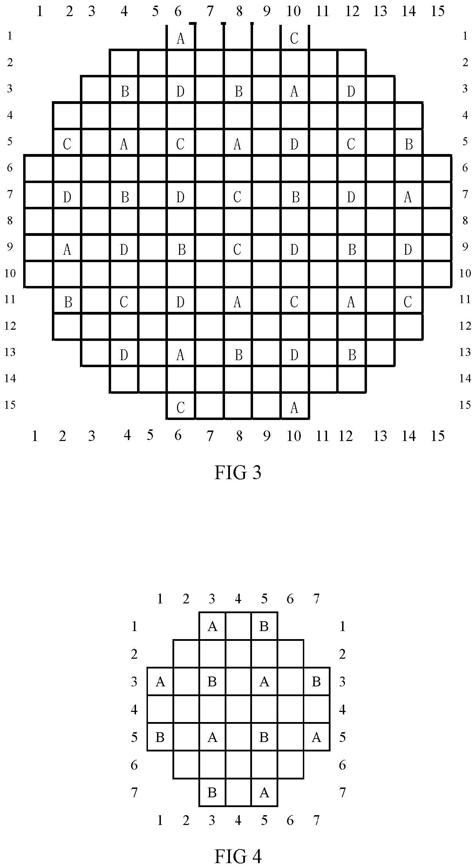

FIG. 3 is an arrangement diagram of a first embodiment of the self-powered detector of the present invention. In this embodiment, the reactor core is a 177 reactor core, and the number of self-powered detectors is 42, which are divided into 4 groups, i.e., group A, group B, group C and group D, wherein a first group (group A), a second group (group B) and a third group (group C) respectively comprise 10 self-powered detectors. A fourth group (Group D) comprises 12 self-powered detectors.

When arranging the 42 self-powered detectors, the following principles shall be followed: in the radial direction of the reactor core, the self-powered detectors in each group are uniformly distributed in the reactor core and are centrosymmetric with respect to the origin of the reactor core in pairs, and the self-powered detectors in each group are crossed and penetrated with each other; In the axial direction of the reactor core, the vertical central axis of each self-powered detector is parallel to that of the reactor core. Specifically, as shown in FIG3. The 10 self-powered detectors of the first group (Group A) are arranged in the following fuel assemblies of the 177 reactor core: the sixth column of the first row, the tenth column of the third row, the fourth column of the fifth row, the eighth column of the fifth row, the fourteenth column of the seventh row, the second column of the ninth row, the eighth column of the eleventh row, the twelfth column of the eleventh row, the sixth column of the thirteenth row and the tenth column of the fifteenth row. The 10 self-powered detectors of the second group (Group B) are arranged in the following fuel assemblies of the 177 reactor core: the fourth column of the third row, the eighth column of the third row, the fourteenth column of the fifth row, the fourth column of the seventh row, the tenth column of the seventh row, the sixth column of the ninth row, the twelfth column of the ninth row, the second column of the eleventh row, the eighth column of the thirteenth row, and the twelfth column of the thirteenth row. The 10 self-powered detectors of the third group (Group C) are respectively arranged in the following fuel assemblies of the 177 reactor core: the tenth column of the first row, the second column of the fifth row, the sixth column of the fifth row, the twelfth column of the fifth row, the eighth column of the seventh row, the eighth column of the ninth row, the fourth column of the eleventh row, the tenth column of eleventh row, the fourteenth column of the eleventh row, and the sixth column of the fifteenth row. The 12 self-powered detectors of the fourth group (Group D) are arranged in the following fuel assemblies of the 177 reactor core: the sixth column of the third row, the twelfth column of the third row, the tenth column of the fifth row, the second column of the seventh row, the sixth column of the seventh row, the twelfth column of the seventh line, the fourth column of the ninth row, the tenth column of the ninth row, the fourteenth column of the ninth line, the sixth column of the eleventh row, the fourth column of the thirteenth row, and the tenth column of the thirteenth row .

FIG. 4 is a schematic diagram of the arrangement of the second embodiment of the self-powered detector of the present invention. In this embodiment, the reactor core is a 37 reactor core, and the number of self-powered detectors is 12, which are divided into two groups, and each group has six self-powered detectors.

When the 12 self-powered detectors are arranged, the following principles shall be followed: in the radial direction of the reactor core, the self-powered detectors in each group are evenly distributed in the reactor core, and every two of them are centrosymmetric with respect to the origin of the reactor core. The self-powered detectors in each group are crossed and penetrated with each other. In the axial direction of the reactor core, the vertical central axis of each self-powered detector is parallel to the vertical central axis of the reactor core. Specifically, as shown in FIG. 4, the six self-powered detectors of the first group (group A) are respectively arranged in the following fuel assemblies of the 37 reactor core: the third column of the first row, the first column of the third row, the fifth column of the third row, the third column of the fifth row, the seventh column of the fifth row, and the fifth column of the seventh row. The six self-powered detectors of the second group (Group B) are respectively arranged in the following fuel assemblies of the 37 reactor core: the fifth column of the first row, the third column of the third row, the seventh column of the third row, the first column of the fifth row, the fifth column of the fifth row, and the third column of the seventh row.

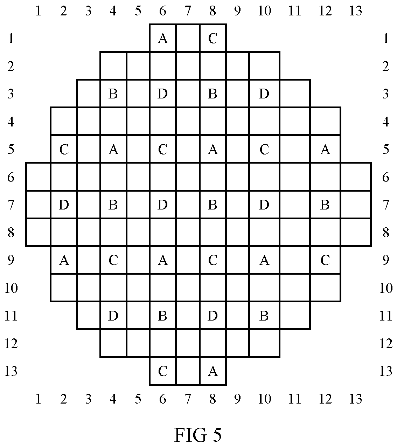

FIG. 5 is a schematic diagram of the arrangement of the third embodiment of the self-powered detector of the present invention. In this embodiment, the reactor core is a 121 reactor core, and the number of self-powered detectors is 30, which are divided into four groups, wherein a first group (Group A) and a third group (Group C) respectively comprise eight self-powered detectors, and a second group (Group B) and a fourth group (Groups D) respectively comprise seven self-powered detectors.

When arranging the 30 self-powered detectors, the following principles shall be followed: in the radial direction of the reactor core, multiple self-powered detectors in each group are uniformly distributed in the reactor core and are centrosymmetric with respect to the origin of the reactor core in pairs, and the multiple self-powered detectors in each group are mutually crossed and penetrated; in the axial direction of the reactor core, the vertical central axis of each self-powered detector is parallel to the vertical central axis of the reactor core. Specifically, as shown in FIG. 5, the eight self-powered detectors of the first group (group A) are respectively arranged in the following fuel assemblies of the 121 reactor core: the sixth column of the first row, the fourth column of the fifth row, the eighth column of the fifth row, the twelfth column of the fifth row, the second column of the ninth row, the sixth column of the ninth row, the tenth column of the ninth row, and the eighth column of the thirteenth row. The seven self-powered detectors of the second group (Group B) are respectively arranged in the following fuel assemblies of the 121 reactor core: the fourth column of the third row, the eighth column of the third row, the fourth column of the seventh row, the eighth column of the seventh row, the twelfth column of the seventh row, the sixth column of the eleventh row, and the tenth column of the eleventh row. The eight self-powered detectors of the third group (Group C) are respectively arranged in the following fuel assemblies of the 121 reactor core: the eighth column of the first row, the second column of the fifth row, the sixth column of the fifth row, the tenth column of the fifth row, the fourth column of the ninth row, the eighth column of the ninth row, the twelfth column of the ninth column, and the sixth column of the thirteenth row. The seven self-powered detectors of the fourth group (group D) are respectively arranged in the following fuel assemblies of the 121 reactor core: the sixth column of the third row, the tenth column of the third row, the second column of the seventh row, the sixth column of the seventh row, the tenth column of the seventh row, the fourth column of the eleventh row, and the eighth column of the eleventh row.

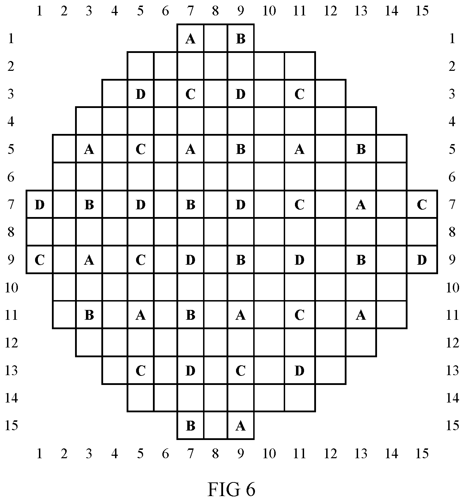

FIG. 6 is an arrangement diagram of the fourth embodiment of the self-powered detector of the present invention. In this embodiment, the reactor core is a 157 reactor core, the number of self-powered detectors is 40, and the self-powered detectors are divided into four groups, namely, group A, group B, group C and group D, and each group has ten self-powered detectors.

When arranging the 40 self-powered detectors, the following principles shall be followed: in the radial direction of the reactor core, multiple self-powered detectors in each group are uniformly distributed in the reactor core and are centrosymmetric with respect to the origin of the reactor core in pairs, and multiple self-powered detectors in each group cross and penetrate each other; In the axial direction of the reactor core, the vertical central axis of each self-powered detector is parallel to that of the reactor core. Specifically, as shown in FIG.6. The 10 self-powered detectors of the first group (Group A) are arranged in the following fuel assemblies of the 157 reactor core: the seventh column of the first row, the third column of the fifth row, the seventh column of the fifth row, the eleventh column of the fifth row, the thirteenth column of the seventh row, the third column of the ninth row, the fifth column of the eleventh row, the ninth column of the eleventh row, the thirteenth column of the eleventh row, and the ninth column of the fifteenth row, The 10 self-powered detectors of the second group (Group B) are arranged in the following fuel assemblies of the 157 reactor core: the ninth column of the first row, the ninth column of the fifth row, the thirteenth column of the fifth row, the third column of the seventh row, the seventh column of the seventh row, the ninth column of the ninth row, the thirteenth column of the ninth row, the third column of the eleventh row, the seventh column of the eleventh row, and the seventh column of the fifteenth row. The 10 self-powered detectors of the third group (Group C) are arranged in the following fuel assemblies of the 157 reactor core: the seventh column of the third row, the eleventh column of the third row, the fifth column of the fifth row, the eleventh column of the seventh row, the fifteenth column of the seventh row, the first column of ninth row, the fifth column of the ninth row, the eleventh column of the eleventh row, the fifth column of the thirteenth row, and the ninth column of the thirteenth row. The 10 self-powered detectors of the fourth group (Group D) are arranged in the following fuel assemblies of the 157 reactor core: the fifth column of the third row, the ninth column of the third row, the first column of the seventh row, the fifth column of the seventh row, the ninth column of the seventh row, the ninth column of the seventh column, the eleventh column of the ninth row, the fifteenth column of the ninth row, the seventh column of the thirteenth row, and the eleventh column of the thirteenth row .

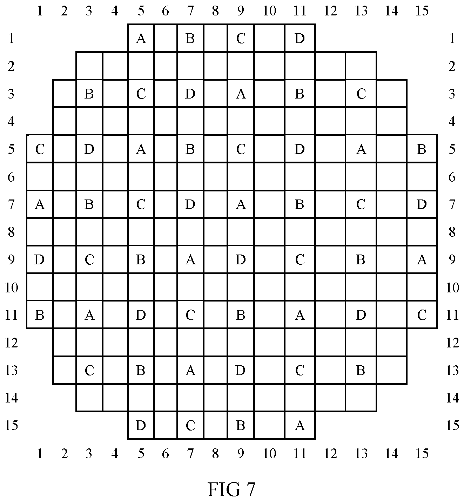

FIG. 7 is an arrangement diagram of a fifth embodiment of the self-powered detector of the present invention. In this embodiment, the reactor core is a 193 reactor core, the number of self-powered detectors is 52, and the self-powered detectors are divided into four groups, i.e., group A, group B, group C and group D, wherein a first group (group A) and a fourth group (group D) respectively comprise 12 self-powered detectors. A second group (group B) and a third group (group C) comprise 14 self-powered detectors respectively.

When arranging the 52 self-powered detectors, the following principles shall be followed: in the radial direction of the reactor core, the self-powered detectors in each group are uniformly distributed in the reactor core and are centrosymmetric with respect to the origin of the reactor core in pairs, and the self-powered detectors in each group are crossed and penetrated with each other; In the axial direction of the reactor core, the vertical central axis of each self-powered detector is parallel to that of the reactor core. Specifically, as shown in FIG7, the 12 self-powered detectors of the first group (Group A) are arranged in the following fuel assemblies of the 193 reactor core: the fifth column of the first row, the ninth column of the third row, the fifth column of the fifth row, the thirteenth column of the fifth row, the first column of the seventh row, the ninth column of the seventh row, the seventh column of the ninth row, the fifteenth column of the ninth row, the third column of the eleventh row, the eleventh column of the eleventh row, the seventh column of the thirteenth row, and the eleventh column of the fifteenth row. The 14 self-powered detectors of the second group (Group B) are respectively arranged in the following fuel assemblies of the 193 reactor core: the seventh column of the first row, the third column of the third row, the eleventh column of the third row, the seventh column of the fifth row, the fifteenth column of the fifth row, the third column of the seventh row, the eleventh column to the seventh row, the fifth column of the ninth row, the thirteenth column of the ninth row, the first column of the eleventh row, the ninth column of the eleventh row, the fifth column of the thirteenth row, the thirteenth column of the thirteenth row, and the ninth column of the fifteenth row. The 14 self-powered detectors of the third group (Group C) are respectively arranged in the following fuel assemblies of the 193 reactor core: the ninth column of the first row, the fifth column of the third row, the thirteenth column of the third row, the first column of the fifth row, the ninth column of the fifth row, the fifth column of the seventh row, the thirteenth column of the seventh row, the third column of the ninth row, the eleventh column of the ninth row, the seventh column of the eleventh row, the fifteenth column of the eleventh row, the third column of the thirteenth row, the eleventh column of the thirteenth row, and the seventh column of the fifteenth row, The 12 self-powered detectors of the fourth group (Group D) are respectively arranged in the following fuel assemblies of the 193 reactor core: the eleventh column of the first row, the seventh column of the third row, the third column of the fifth row, the eleventh column of the fifth row, the seventh column of the seventh row, the fifteenth column of the seventh row, the first column of the ninth row, the ninth column of the ninth row, the fifth column of the eleventh row, the thirteenth column of the eleventh row, the ninth column of the thirteenth row, and the fifth column of the fifteenth row.

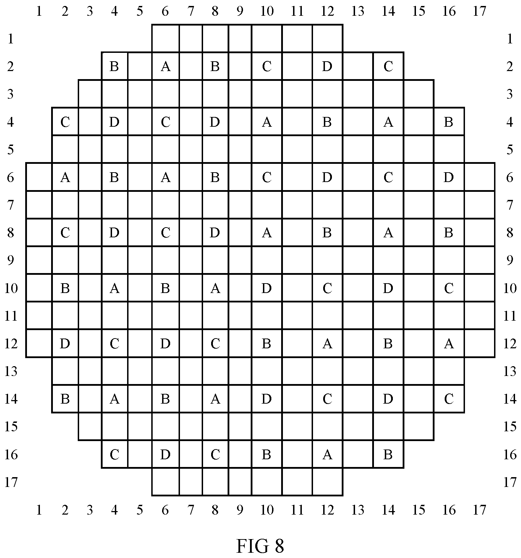

FIG. 8 is an arrangement diagram of a sixth embodiment of the self-powered detector of the present invention. The reactor core of this embodiment is a 241 reactor core, and the number of the self-powered detectors is 60, which are divided into four groups, namely, group A, group B, group C and group D, wherein a first group (group A) and a fourth group (group D) respectively comprise 14 self-powered detectors. A second group (group B) and a third group (group C) comprise 16 self-powered detectors respectively.

When the 60 self-powered detectors are arranged, the following principles shall be followed: in the radial direction of the reactor core, the self-powered detectors in each group are uniformly distributed in the reactor core and are centrosymmetric with respect to the origin of the reactor core in pairs, and the self-powered detectors in each group are crossed and penetrated with each other; in the axial direction of the reactor core, the vertical central axis of each self-powered detector is parallel to the vertical central axis of the reactor core. Specifically, as shown in FIG8. The 14 self-powered detectors of the first group (Group A) are respectively arranged in the following fuel assemblies of the 241 reactor core: the sixth column of the second row, the tenth column of the fourth row, the fourteenth column of the fourth row, the second column of the sixth row, the sixth column of the sixth row, the tenth column of the eighth row, the fourteenth column of the eighth row, the fourth column of the tenth row, the eighth column of the tenth row, the twelfth column of the twelfth row, the sixteenth column of the twelfth row, the eighth column of the fourteenth row, and the twelfth column of the sixteenth row. The second group (Group B) of the 16 self-powered detectors are arranged in the following fuel assemblies of the 241 reactor core: the fourth column of the second row, the eighth column of the second row, the twelfth column of the fourth row, the sixteenth column of the fourth row, the fourth column of the sixth row, the eighth column of the sixth row, the twelfth column of the eighth row, the sixteenth column of the eighth row, the second column of the tenth row, the sixth column of the tenth row, the tenth column of the twelfth row, the fourteenth column of the twelfth row, the second column of the fourteenth row, the sixth column of the fourteenth row, the tenth column of the sixteenth row, and the fourteenth column of the sixteenth row. The 16 self-powered detectors of the third group (Group C) are respectively arranged in the following fuel assemblies of the 241 reactor core: the tenth column of the second row, the fourteenth column of the second row, the second column of the fourth row, the sixth column of the fourth row, the tenth column of the sixth row, the fourteenth column of the sixth row, the second column of the eighth row, the sixth column of the eighth row, the twelfth column of the tenth row, the sixteenth column of the tenth row, the fourth column of the twelfth row, the eighth column of the twelfth row, the twelfth column of the fourteenth row, the sixteenth column of the fourteenth row, the fourth column of the sixteenth row, and the eighth column of the sixteenth row. The 14 self-powered detectors of the fourth group (Group D) are respectively arranged in the following fuel assemblies of the 241 reactor core: the twelfth column of the second row, the fourth column of the fourth row, the eighth column of the fourth row, the twelfth column of the sixth row, the sixteenth column of the sixth row, the fourth column of the eighth row, the eighth column of the eighth row, the tenth column of the tenth row, the fourteenth column of the tenth row, the second column of the twelfth row, the sixth column of the twelfth row, the fourteenth column of the fourteenth row, and the sixth column of the sixteenth row.

When the self-powered detectors are arranged in each type of reactor core, the uniform distribution of the self-powered detectors in the reactor core can be realized, and meanwhile, each group of self-powered detectors are symmetrical along the origin of the reactor core, so that the neutron flux rate distribution of the whole reactor core can be accurately simulated.

The foregoing is merely a preferred embodiment of the present invention and is not intended to limit the present invention, which is susceptible to various modifications and variations as will occur to those skilled in the art. Any adaptations, equivalents, modifications, and the like, which are within the spirit and principles of the present invention, are intended to be comprised within the scope of the appended claims.

## Claims

1. A reactor core power online monitoring method, comprising:
obtaining measurement data of each self-powered detector in each group, wherein the self-powered detectors in the reactor core are divided into 2 to 4 groups, the self-powered detectors in each group are uniformly distributed in the reactor core in the radial direction of the reactor core, every two self-powered detectors are centrosymmetric with respect to the origin of the reactor core, and the self-powered detector in each group are mutually crossed and penetrated; in the axial direction of the reactor core, the vertical central axis of each self-powered detector is parallel to the vertical central axis of the reactor core;
determining whether each self-powered detector in each group has a failure or not according to the measurement data, and taking the measurement data of the self-powered detector which is centrosymmetric with the self-powered detector with the failure as own measurement data;
performing reconfigurable computing on the three-dimensional power distribution of the whole reactor core according to the measurement data of each self-powered detector in each group.

2. The reactor core power online monitoring method according to claim 1, wherein the arrangement position of the self-powered detector does not coincide with the arrangement position of the control rod.

3. The reactor core power online monitoring method according to claim 1, wherein the self-powered detectors are arranged in alternate rows and columns in the reactor core.

4. The reactor core power online monitoring method according to claim 1, wherein the arrangement density of the fuel assemblies of the self-powered detector at the periphery of the reactor core is lower than that of the fuel assemblies at the center of the reactor core.

5. A reactor core power online monitoring system, comprising:
a plurality of self-powered detectors, wherein the self-powered detectors in the reactor core are divided into 2 to 4 groups, and in the radial direction of the reactor core, a plurality of self-powered detectors in each group are uniformly distributed in the reactor core and are centrosymmetric with respect to the original point of the reactor core in pairs, and the self-powered detector in each group are mutually crossed and permeated; in the axial direction of the reactor core, the vertical central axis of each self-powered detector is parallel to the vertical central axis of the reactor core;
an acquisition module, which is used for obtaining the measurement data of each self-powered detector in each group;
a failure processing module, which is used for determining whether each self-powered detector in each group has a failure according to the measurement data and taking the measurement data of the self-powered detector which is centrosymmetric with the self-powered detector with failure as the own measurement data;
and a reconfigure computing module, which is used for carrying out reconfigure computing on the three-dimensional power distribution of the whole reactor core according to the measurement data of each self-powered detector in each group.

6. The reactor core power online monitoring system according to claim 5, wherein the arrangement position of the self-powered detector is not coincident with the arrangement position of the control rod.

7. The reactor core power online monitoring system according to claim 5, wherein the individual self-powered detectors are arranged in alternate rows and columns in the reactor core.

8. The reactor core power online monitoring system according to claim 5, wherein the arrangement density of the fuel assemblies of the self-powered detector at the periphery of the reactor core is lower than that of the fuel assemblies at the center of the reactor core.

9. The reactor core power online monitoring system according to any one of claims 6-8, wherein in a 177 reactor core, the number of the self-powered detectors is 42, and the self-powered detectors are divided into 4 groups, wherein a first group, a second group, and a third group respectively comprise 10 self-powered detectors, and a fourth group comprises 12 self-powered detectors.

10. The reactor core power online monitoring system according to claim 9, wherein
the 10 self-powered detectors of the first group are respectively arranged in the following fuel assemblies of the 177 reactor core: the sixth column of the first row, the tenth column of the third row, the fourth column of the fifth row, the eighth column of the fifth row, the fourteenth column of the seventh row, the second column of the ninth row, the eighth column of the eleventh row, the twelfth column of the eleventh row, and the sixth column of the thirteenth row, and the tenth column of the fifteenth row;
the 10 self-powered detectors of the second group are respectively arranged in the following fuel assemblies of the 177 reactor core: the fourth column of the third row, the eighth column of third row, the fourteenth column of the fifth row, the fourth column of the seventh row, the tenth column of the seventh row, the sixth column of the ninth row, the twelfth column of the ninth row, the second column of the eleventh row, the eighth column of the thirteenth row, and the twelfth column of the thirteenth row;
the 10 self-powered detectors of the third group are respectively arranged in the following fuel assemblies of the 177 reactor core: the tenth column of the first row, the second column of the fifth row, the sixth column of the fifth row, the twelfth column of the fifth row, the eighth column of the seventh row, the eighth column of the ninth row, the fourth column of the eleventh row, the tenth column of the eleven row, the fourteenth column of the eleventh row, and the sixth column of the fifteenth row;
the 12 self-powered detectors of the fourth group are respectively arranged in the following fuel assemblies of the 177 reactor core: the sixth column of the third row, the twelfth column of the third row, the tenth column of the fifth row, the second column of the seventh row, the sixth column of seventh row, the twelfth column of the seventh row, the fourth column of the ninth row, the tenth column of the ninth row, the fourteenth column of the ninth line, the sixth columns of the eleventh row, the fourth column of the thirteenth row, and the tenth column of the thirteenth row.

11. The reactor core power online monitoring system according to any one of claims 6-8, wherein in a 37 reactor core, the number of the self-powered detectors is 12, and the self-powered detectors are divided into two groups, and each group comprises six self-powered detectors.

12. The reactor core power online monitoring system according to claim 11, wherein
the six self-powered detectors of the first group are respectively arranged in the following fuel assemblies of the 37 reactor core: the third column of the first row, the first column of the third row, the fifth column of the third row, the third column of the fifth row, the seventh column of the fifth row, and the fifth column of the seventh row;
the six self-powered detectors of the second group are respectively arranged in the following fuel assemblies of the 37 reactor core: the fifth column of the first row, the third column of the third row, the seventh column of the third row, the first column of the fifth row, the fifth column of the fifth row, and the third column of the seventh row.

13. The reactor core power online monitoring system according to any one of claims 6-8, wherein in the 121 reactor core, the number of the self-powered detectors is 30, and the detectors are divided into four groups, wherein a first group and z third group respectively comprise 8 self-powered detectors, and a second group and a fourth group respectively comprise 7 self-powered detectors.

14. The reactor core power online monitoring system according to claim 13, wherein
the eight self-powered detectors of the first group are respectively arranged in the following fuel assemblies of the 121 reactor core: the sixth column of the first row, the fourth column of the fifth row, the eighth column of the fifth row, the twelfth column of the fifth row, the second column of the ninth row, the sixth column of the ninth row, the tenth column of the ninth row, and the eighth column of the thirteenth row;
the seven self-powered detectors of the second group are respectively arranged in the following fuel assemblies of the 121 core: the fourth column of the third row, the eighth column of the third row, the four reactor th column of the seventh row, the eighth column of the seventh row, the twelfth column of seventh row, the sixth column of the eleventh row, and the tenth column of the eleventh row;
the eight self-powered detectors of the third group are respectively arranged in the following fuel assemblies of the 121 reactor core: the eighth column of the first row, the second column of the fifth row, the sixth column of the fifth row, the tenth column of the fifth row, the fourth column of the ninth row, the eighth column of the ninth row, the twelfth column of the ninth row, and the sixth column of the thirteenth row;
the seven self-powered detectors of the fourth group are respectively arranged in the following fuel assemblies of the 121 reactor core: the sixth column of the third row, the tenth column of the third row, the second column of the seventh row, the sixth column of the seventh row, the tenth column of the seven row, the fourth column of the eleventh row, and the eighth column of the eleventh row.

15. The reactor core power online monitoring system according to any one of claims 6-8, wherein in the 157 reactor core, the number of the self-powered detectors is 40, and the self-powered detectors are divided into four groups, and each group is ten self-powered detectors.

16. The reactor core power online monitoring system according to claim 15, wherein
the 10 self-powered detectors of a first group are respectively arranged in the following fuel assemblies of the 157 reactor core: the seventh column of the first row, the third column of the fifth row, the seventh column of the fifth row, the eleventh column of the fifth row, the thirteenth column of the seventh row, the third column of the ninth row, the fifth column of the eleventh row, the ninth column of the eleventh row, the thirteenth column of the eleventh row, and the ninth column of the fifteenth row ;
the 10 self-powered detectors of the second group are respectively arranged in the following fuel assemblies of the 157 reactor core: the ninth column of the first row, the ninth column of the fifth row, the thirteenth column of the fifth row, the third column of the seventh row, the seventh column of the seventh row, the ninth column of the ninth row, the thirteenth column of the ninth row, the third column of the eleventh row, the seventh column of the eleventh row, and the seventh column of the fifth row;
the 10 self-powered detectors of the third group are respectively arranged in the following fuel assemblies of the 157 reactor core: the seventh column of the third row, the eleventh column of the third row; the fifth column of the fifth row, the eleventh column of the seventh row, the fifteenth column of the seventh row, the first column of the ninth row, the fifth column of the ninth row, the fifth column of the thirteenth row, the fifth column of the thirteenth row, and the ninth column of the thirteenth row;
the 10 self-powered detectors of the fourth group are respectively arranged in the following fuel assemblies of the 157 reactor core: the fifth column of the third row, the ninth column of the third row, the first column of the seventh row, the fifth column of the seventh row, the ninth column of the seven row, the seventh column of the nine row, the eleventh column of the ninth row, the fifteenth column of the ninth row, the seventh column of the thirteenth row, and the eleventh column of the thirteenth row.

17. The reactor core power online monitoring system according to any one of claims 6-8, wherein in the 193 reactor core, the number of the self-powered detectors is 52, and the self-powered detectors are divided into four groups, wherein a first group and a fourth group respectively comprise 12 self-powered detectors, and a second group and a third group respectively comprise 14 self-powered detectors.

18. The reactor core power online monitoring system according to claim 17, wherein
the 12 self-powered detectors of the first group are respectively arranged in the following fuel assemblies of the 193 reactor core: the fifth column of the first row, the ninth column of the third row, the fifth column of the fifth row, the thirteenth column of the fifth row, the first column of the seventh row, the ninth column of the seventh row, the seventh columns of the ninth row, the fifteenth columns of the ninth row, the third columns of the eleventh row, the eleventh columns of the eleventh row, the seventh column of the thirteenth row, and the eleventh column of the fifth row;
the 14 self-powered detectors of the second group are respectively arranged in the following fuel assemblies of the 193 reactor core: the seventh column of the first row, the third column of the third row, the eleventh column of the third row, the seventh column of the fifth row, the fifteenth column of the fifth row, the third column of the seventh row, the eleventh column of the seventh row, the fifth column of the ninth row, the thirteenth column of the ninth row, the tenth column of the eleventh row, the fifth column of the thirteenth row, the thirteenth column of the thirteenth row, and the ninth column of the fifteenth row;
the 14 self-powered detectors of the third group are respectively arranged in the following fuel assemblies of the 193 reactor core: the ninth column of the first row, the fifth column of the third row, the thirteenth column of the third row, the first column of the fifth row, the ninth column of the fifth row, the fifth column of the seventh row, the thirteenth column of the seventh row, the third column of the ninth row, the eleventh column of the ninth row, the seventh column of the eleventh row , the fifteenth column of the eleventh row, the third column of the thirteenth row, the eleventh column of the thirteenth row, and the seventh column of the fifteenth row;
the 12 self-powered detectors of the fourth group are respectively arranged in the following fuel assemblies of the 193 reactor core: the eleventh column of the first row, the seventh column of the third row, the third column of the fifth row, the eleventh columns of the fifth row, the seventh columns of the seventh row, the fifteenth columns of the seventh row, the first columns of the ninth row, the ninth column of the ninth row, the fifth column of the eleventh row, the thirteenth column of the eleventh row, the ninth column of the thirteenth row, and the fifth column of the fifteenth row.

19. The reactor core power online monitoring system according to any one of claims 6-8, wherein in the 241 reactor core, the number of the self-powered detectors is 60, and the self-powered detectors are divided into four groups, wherein a first group and a fourth group respectively comprise 14 self-powered detectors, and a second group and a third group respectively comprise 16 self-powered detectors.

20. The reactor core power online monitoring system according to claim 19, wherein
the 14 self-powered detectors of the first group are respectively arranged in the following fuel assemblies of the 241 reactor core: the sixth column of the second row, the tenth column of the fourth row, the fourteenth column of the fourth row, the second column of the sixth row, the sixth column of the sixth row, the tenth column of the eighth row, the fourteenth column of the eighth row, the fourth column of the tenth row, the eighth column of the tenth row, the twelfth column of the twelfth row, the sixteenth column of the twelfth row, the fourth column of the fourteenth row, the eighth column of the fourteenth row, and the twelfth column of the sixteenth row;
The 16 self-powered detectors of the second group are respectively arranged in the following fuel assemblies of the 241 reactor core: the fourth column of the second row, the eighth column of the second row, the twelfth column of the fourth row, the sixteenth column of the fourth row, the fourth column of the sixth row, the eighth column of the sixth row, the twelfth column of the eighth row, the sixteenth column of the eighth row, the second column of the tenth row, the sixth column of the tenth row, the tenth column of the twelfth row, the fourteenth column of the twelfth row, the second column of the fourteenth row, the sixth column of the fourteenth row, the tenth column of the sixteenth row, and the fourteenth column of the sixteenth row;
the 16 self-powered detectors of the third group are respectively arranged in the following fuel assemblies of the 241 reactor core: the tenth column of the second row, the fourteenth column of the second row, the second column of the fourth row, the sixth column of the fourth row, the tenth column of the sixth row, the fourteenth column of the sixth row, the second column of the eighth row, the sixth column of the eighth row, the twelfth column of the tenth row, the sixteenth column of tenth row, the fourth column of the twelfth row , the eighth column of the twelfth row, the twelfth column of the fourteenth row, the sixteenth column of the fourteenth row, the fourth column of the sixteenth row, and the eighth column of the sixteenth row;
the 14 self-powered detectors of the fourth group are respectively arranged in the following fuel assemblies of the 241 reactor core: the twelfth column of the second row, the fourth column of the fourth row, the eighth column of the fourth row, the twelfth column of the sixth row, the sixteenth column of the sixth row, the fourth column of the eighth row, the eighth column of the eighth row, the tenth column of the tenth row, the fourteenth column of the tenth row, the second column of the twelfth row, the sixth column of the twelfth row, the tenth column of the fourteenth row, the fourteenth column of the fourteenth row, and the sixth column of the sixteenth row.
